# EUROPEAN PATENT SPECIFICATION

(11) **EP 0 470 643 B1**
(45) Date of publication and mention of the grant of the patent: **11.10.1995**
(21) Application number: 91113440.1
(22) Date of filing: 09.08.1991
(51) Int. Cl.: H04N 9/44, H04N 17/00

(54) **Color field detection circuit of pal video signal**
Schaltung zum Ermitteln eines Halbbildes eines Pal-Videosignals
Circuit pour détecter une trame d'un signal vidéo pal

(30) Priority: 09.08.1990 JP 212654/90
(43) Date of publication of application: 12.02.1992
(73) Proprietor: VICTOR COMPANY OF JAPAN, LIMITED, Kanagawa-ku Yokohama (JP)
(72) Inventor: Hidetoshi, Ozaki, Kohoku-ku, Yokohama (JP); Akira, Goukura, Totsuka-ku, Yokohama (JP)
(74) Representative: Dipl.-Phys.Dr. Manitz Dipl.-Ing. Finsterwald Dipl.-Ing. Grämkow Dipl.-Chem Dr. Heyn Dipl.Phys. Rotermund Morgan, B.Sc.(Phys)

(56) References cited:
- DE-A- 2 921 962
- DE-A- 3 144 597
- GB-A- 2 224 616

## Description

### BACKGROUND OF THE INVENTION

### 1. Field of the Invention

This invention relates to a color field detection circuit of a PAL video signal

### 2. Description of the Prior Art

From DE-A1-2 921 962 a method and a circuitry for the detection of a certain sequence of eight successive fields of a PAL-coded colour television signal is known. In this known circuitry, a certain sequence of four successive fields is determined and the beginning of the determined PAL-four field sequence is arbitrarily assumed to be the beginning of the sought PAL eight field sequence. The phase-deviation derived from this assumption between the phase difference signal and the frame repetition signal of the colour television signal is evaluated as to whether or not the difference between the phase deviation and a phase reference position is smaller than 90°. In response to this evaluation, a correction of the assumption may be carried out.

The circuitry can be used to determine the PAL-eight field sequency automatically. However, the circuitry known from DE-A1 29 21 962 is complex and requires tight tolerances due to the high accuracy necessary for phase discrimination. Thus a color field detection circuit of the PAL-phase alternation by line video signal is known. Generally, such a circuit comprises an SCH (subcarrier to horizontal synchronizing signal) phase detection circuit for detecting phase difference between a horizontal synchronizing signal and a subcarrier of the PAL video signal, and a discrimination circuit for discriminating an output of the SCH phase detection circuit to produce a color field signal indicative of an ordinal number of fields (first to eighth).

In PAL system, eight-field sequence is adopted. The phase relation between the horizontal synchronizing signal and the subcarrier changes with every field and returns to the beginning state at every eight fields. Therefore, when editing is carried out using PAL video signals, for example, editing is made between PAL video signals from two video cameras, it is necessary to detect which ordinal number of the color field the present field belongs to.

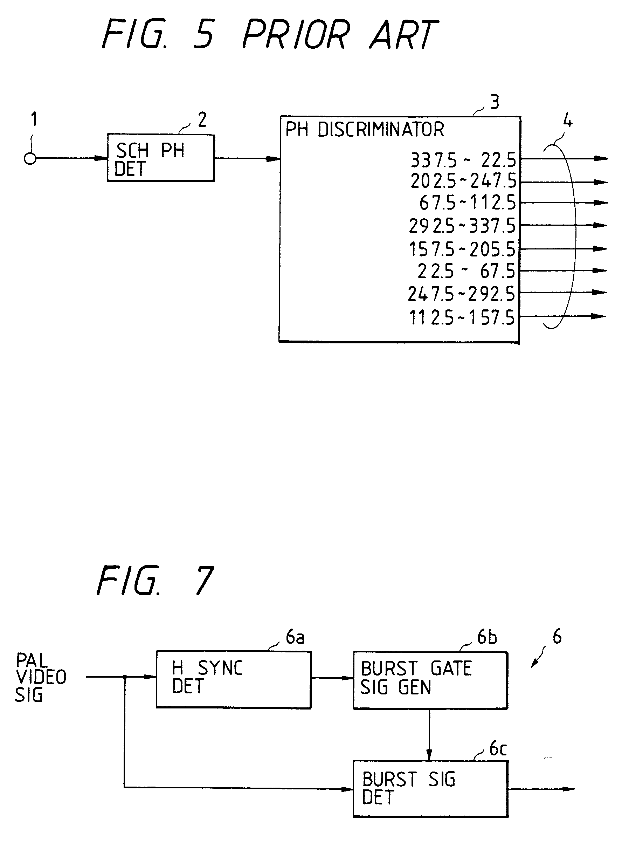

Fig. 5 is a block diagram of a prior art color field detection circuit of the PAL video signal. In Fig. 5, the color field detection circuit of PAL video signal comprises an SCH (subcarrier to horizontal synchronizing signal) phase detection circuit 2 for detecting a phase difference between a horizontal synchronizing signal (actually, vertical synchronizing signal) and a subcarrier of the PAL video signal and a phase discrimination circuit 3 for discriminating an output of the SCH phase detection circuit 2 to produce a color field signal indicative of an ordinal number of fields (first to eighth). The phase discriminating circuit 3 discriminates the phase difference into eight angle ranges as shown.

However, in the prior art detection circuit, there is a drawback that an extreme high accuracy is required for phase-discrimination because one angle range is ± 22.5° (about 14 micro seconds). Moreover, there are also drawbacks that delay time of peripheral circuitry should be controlled strictly, a nose margin is low, and there are eight points where SCH phase cannot be detected.

### SUMMARY OF THE INVENTION

The present invention has been developed in order to remove the above-described drawbacks inherent to the conventional color field detection circuit of the PAL video signal.

According to the present invention there is provided a color field detection circuit of a PAL video signal comprising the features of the independent claim 1.

Advantageous embodiments are described in the dependent claims.

### BRIEF DESCRIPTION OF THE DRAWINGS

The object and features of the present invention will become more readily apparent from the following detailed description taken in conjunction with the accompanying drawings in which:
Fig. 1 is a block diagram of an embodiment of the invention of a color field detection circuit of the PAL video signal;
Fig. 2 shows relations between the color field number and SCH phase difference reference values;
Fig. 3 shows change of phase difference between the horizontal synchronizing signal and the subcarrier with fields;
Fig. 4 shows phase relations between color fields 2 and 6; 3 and 7; and 4 and 8;
Fig. 5 is a block diagram of a prior art color field detection circuit of the PAL video signal;
Fig. 6 shows waveforms of the PAL video signal showing consecutive eight color fields around vertical synchronizing signals and a burst gate signal; and
Fig. 7 is a block diagram of the burst detection circuit of Fig. 1.

The same or corresponding elements or parts are designated as like references throughout the drawings.

### DETAILED DESCRIPTION OF THE INVENTION

Hereinbelow will be described an embodiment of this invention with reference to drawings.

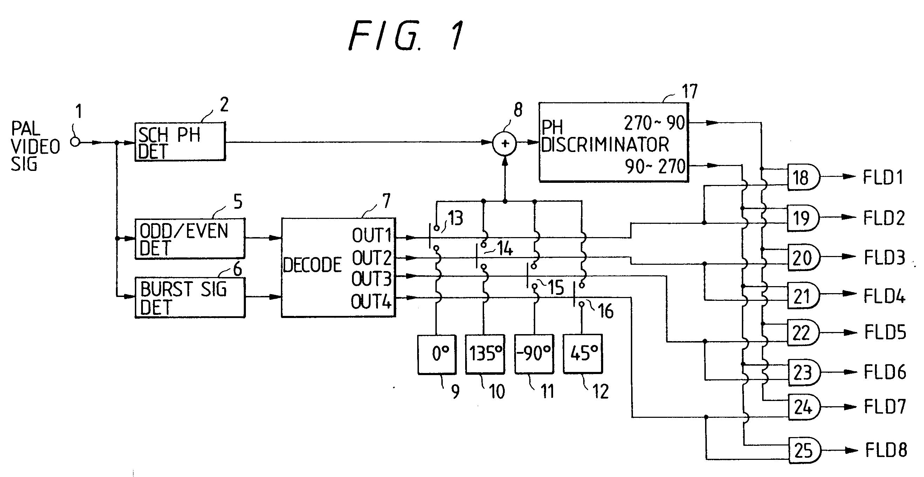

Fig. 1 is a block diagram of the embodiment of a color field detection circuit of a PAL video signal. In Fig. 1, a composite PAL video signal is applied to an SCH (subcarrier to horizontal signal) phase detection circuit 2, a well-known odd/even field detection circuit 5, and a burst signal detection circuit 6 via an input terminal 1. The SCH phase detection circuit 2 detects a phase difference between the subcarrier of the PAL video signal and the horizontal signal (actually, vertical synchronizing signal). The odd/even field detection circuit 5 detects which field of odd/even does the present field belong to. The burst signal detection circuit 6 detects whether a color burst signal is present or absent at a horizontal scanning line interval just after detection of a first horizontal synchronizing signal following equalizing pulses. The SCH phase detection circuit 2 is disclosed in US-A-4,721,904. Burst signal detection circuits 6 are well known in the art.

Fig. 7 is a block diagram of the burst signal detection circuit 6 which comprises a horizontal synchronizing signal detection circuit 6a responsive to the PAL video signal for detecting the first horizontal synchronizing signal following equalizing pulses, and a burst gate signal generation circuit 6b responsive to an output of the horizontal synchronizing signal detection circuit 6a for generating a burst gate signal indicative of the color burst signal of the first horizontal scanning line after a vertical synchronizing signal, and a detection circuit 6c responsive to an output of the burst gate signal generation circuit 6b and the PAL video signal for detecting whether the color burst signal of the first horizontal scanning line is present or absent.

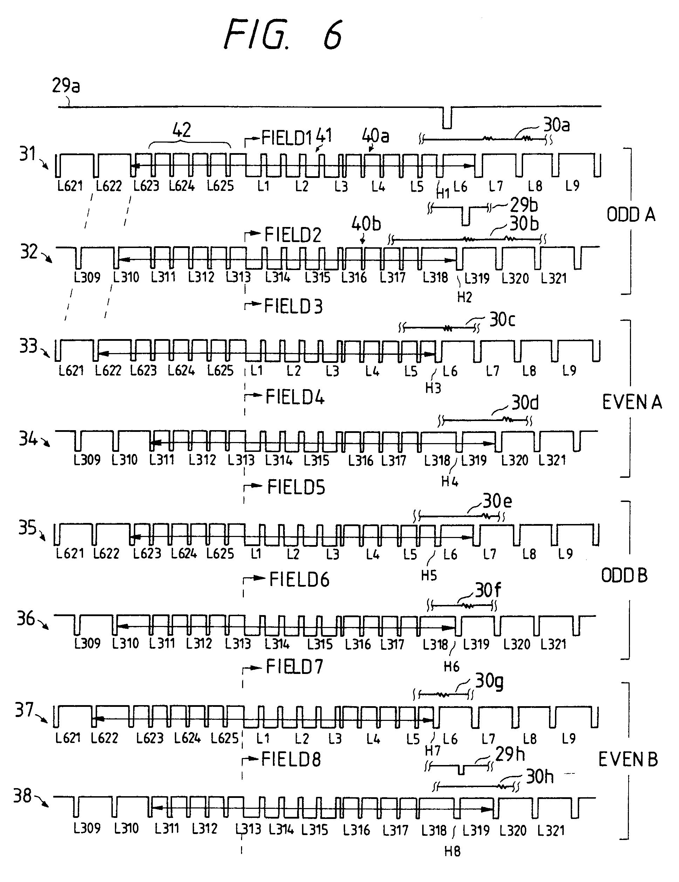

Fig. 6 shows waveforms 31-28 of the PAL video signal showing consecutive eight color fields around vertical synchronizing signals and burst gate signals 29a-29h. In Fig. 6, consecutive eight color fields of PAL signal include ODD A, EVEN A, ODD B, and EVEN B fields which are denoted at right ends thereof. References L1-L625 are ordinal numbers of horizontal scanning lines in each frame. In the PAL system, timing of the color burst signal first generated changes with field. In the waveform 31, the color burst signal 30a first generated in the first field is generated not at the first horizontal scanning line L6 just after equalizing pulses 40a but at the second horizontal scanning period L7. In the waveform 32, the color burst signal 30b firstly generated in the second field is generated at the first horizontal scanning line L319 just after equalizing pulses 40b. The horizontal synchronizing signal detection circuit 6a detects the first horizontal synchronizing signal just after equalizing pulses 40a and 40b. The burst signal gate generation circuit 6b generates the burst gate signals 29a-29h for detecting the presence or absence of the color burst signal in response to the burst gate signal. The detection circuit 6c detects whether the color burst signal is present or absent in the PAL signal in response to each of the burst gate signals 29a-29h, namely it detects the color burst signal accompanying the horizontal synchronizing signal just after equalizing pulses 40a and 40b.

Outputs of the odd/even detection circuit 5 and the burst signal detection circuit 6 are sent to a decode circuit 7. The decode circuit 7 decodes the output signals of the odd/even detection circuit 5 and the burst detection circuit 6. That is, the decode circuit 7 outputs four decode outputs OUT1, OUT2, OUT3, and OUT4, in accordance with combination of that the present field is of odd or even field and that the color burst signal is present or absent. The output OUT1 is sent to a switch 13 and to one input of each of AND gates 18 and 19. The output OUT2 is sent to a switch 14 and to one input of each of AND gates 20 and 21. The output OUT3 is sent to a switch 15 and to one input of each of AND gates 22 and 23. The output OUT4 is sent to a switch 16 and to one input of each of AND gates 24 and 25. The switch 13 transfers a first coefficient signal from a coefficient circuit 9 in response to output OUT1. The switch 14 transfers a second coefficient signal from a coefficient circuit 10 in response to output OUT2. The switch 15 transfers a third coefficient signal from a coefficient circuit 11 in response to output OUT3. The switch 15 transfers a fourth coefficient signal from a coefficient circuit 12 in response to output OUT4. The coefficient circuit 9 generates the first coefficient signal whose magnitude corresponds a phase difference of 0° between the horizontal synchronizing signal and the subcarrier (SCH phase difference). The coefficient circuit 10 generates the second coefficient signal whose magnitude corresponds an SCH phase difference of 135°. The coefficient circuit 11 generates the third coefficient signal whose magnitude corresponds an SCH phase difference of -90°. The coefficient circuit 12 generates the fourth coefficient signal whose magnitude corresponds an SCH phase difference of 45°. The first to fourth coefficient signals are sent to an adder 8 whose another input is supplied with the output of the SCH phase detection circuit 2. The adder 8 adds the output of the SCH phase detection circuit 2 to one of the first to fourth coefficient signals as an offset in accordance with outputs OUT1-OUT4 of the decoder 7.

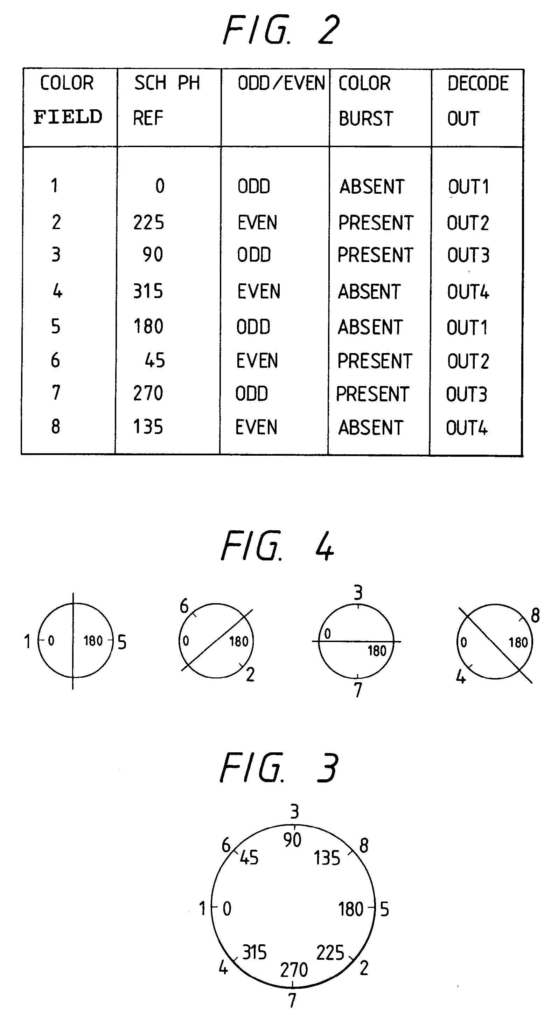

Fig. 2 shows relations between the color field number and SCH phase difference reference values; odd or even of field; the presence or absence of the color burst signal; and decode output OUT1-OUT4. Fig. 3 shows change of phase difference between the horizontal synchronizing signal and subcarrier with fields. In Fig. 2, when the present color field is "1", the output of odd/even detection circuit indicates ODD, and the burst signal detection circuit 6 indicates the absence of the color burst, so that the decoder 7 produced the output OUT 1. As similarly, when the present color field is "5", the decoder 7 produces the output OUT1. Therefore, the color fields "1" and "5" can be distinguished by discriminating the SCH phase difference between 0° and 180° after detection of odd/even of fields and the presence or absence of the color burst signal and decoding these results. Fig. 4 shows phase relations between color fields 1 and 5; 2 and 6; 3 and 7; and 4 and 8, for respective same decoding results (i.e., the outputs OUT1-OUT4).

The adder 8 adds the phase difference and the first to fourth coefficient signals in accordance with the decode out OUT1-OUT4. When the decoder 7 produces the decode output OUT1, the adder 8 adds a coefficient value 0° as an offset to the SCH phase difference of 0° when the color field is "1" or a coefficient value 0° to the SCH phase difference of 180° when color field is "5". A phase discriminator 17 classifies the phase difference with the offset into two angle ranges, namely a first angle range 270°-90° and a second angle range 90°-270°. Classifying the phase difference into only two angle ranges causes the phase-discriminating range of the phase difference to be widen to ± 90° (56 micro seconds), so that phase difference detection is made easier.

A logic circuit including the AND gates 18-25 produces color field signals FLD1 to FLD8 in accordance with the result of the phase discriminator 17 and the decode out OUT1-OUT4 as shown the relation shown in Fig. 2.

## Claims

1. A color field detection circuit of a PAL video signal, comprising:
(a) phase detection means (2) responsive to said PAL video signal for detecting the phase difference between the subcarrier of said PAL video signal and the vertical synchronizing signal or the horizontal synchronizing signal of said PAL video signal;
(b) odd/even-field detection means (5) responsive to said PAL video signal for detecting whether the present field is odd or even to produce an odd/even signal;
(c) burst signal detection means (6) responsive to said PAL video signal for detecting whether a color burst signal of said PAL video signal is present or absent at a given interval determined by detection of a horizontal synchronizing signal first occurring just after equalizing pulses of said PAL signal to produce a presence/absence signal;
(d) classifying means responsive to said phase difference, said odd/even signal, and said presence/absence signal for classifying said phase difference into one group of first to fourth color fields and another group of fifth to eighth color fields on the basis of combination of states of said odd/even signal and presence/absence signal, said classifying means comprising:
(dI) decoding means (7) for decoding an output of said odd/even and said presence/absence signals into four states;
(dII) offset means (8-16) for offsetting said phase difference by an angle value in accordance with said four states such that said phase difference of said first to fourth color fields lies in a first angle range and said phase difference of said fifth to eighth color fields lies in a second angle range;
(dIII) phase discriminating means (17) for detecting whether said offset phase difference lies in said first angle range or said second angle range; and
(e) color field detection means (18-25) for detecting which ordinal number of said color field the present field belongs to out of said first to eighth color fields on the basis of the result of the said classifying means and said combination of states.

2. A color field detection circuit of a PAL video signal as claimed in claim 1, wherein said burst signal detection means (6) comprises:
(a) burst gate means (6b) responsive said PAL video signal for generating a burst gate signal indicative of said given interval in response to detection of a horizontal synchronizing signal firstly occurring just after equalizing pulses of said PAL signal; and
(b) detection means (6c) responsive to said burst gate signal for detecting whether said color burst signal is present or absent at said given interval to produce a presence/absence signal.

3. A color field detection circuit of a PAL video signal as claimed in claim 1, wherein said
color field detection means comprises :
logic means (18-25) responsive to an amount of said decoding means (7) and said phase discriminating means (17) for determining which field of the PAL video signal the present field belongs to out of first to eighth color fields in accordance with said four states and an output of said phase discriminating means.

4. A color field detection circuit of a PAL video signal as claimed in claim 1 wherein said offset means comprises:
(a) coefficient circuit (9-12) for generating a coefficient signal in accordance with an output of said odd/even-field detection means (5) and said burst signal detection means (6) such that it generates a first offset corresponding said phase difference of 0° (9) when said odd/even signal is odd and said presence/absence signal is absent; a second offset corresponding said phase difference of 135° (10) when said odd/even signal is even and said presence/absence signal is present; a third offset corresponding said phase difference of -90° (11) when said odd/even signal is odd and said presence/absence signal is present; a fourth offset corresponding said phase difference of 45° (12) when said odd/even signal is even and said presence/absence signal is absent; and
(b) adding means (18) for adding an output of said coefficient circuit to said phase difference.

5. A color field detection circuit of a PAL video signal as claimed in claim 1, wherein said first angle range is 270° to 90° and said second angle range is 90° to 270°.

6. A color field detection circuit of a PAL video signal as claimed in claim 3, wherein said logic means (18-25) comprises:
a first AND gate responsive to an output of said phase discriminating means (17) for producing a first field signal when said output of said adding means (8) is in said range of 270° to 90°, said odd/even signal indicates odd and said presence/absence signal is of the absence;
a second AND gate responsive to an output of said phase discriminating means (17) for producing a second field signal when said output of said adding means (8) is in said range of 270° to 90°, said odd/even signal indicates said even and said presence/absence signal is of the presence;
a third AND gate responsive to an output of said phase discriminating means (17) for producing a third field signal when said output of said adding means (8) is in said range of 270° to 90°, said odd/even signal indicates odd and said presence/absence signal is of the presence;
a fourth AND gate responsive to an output of said phase discriminating means (17) for producing a fourth field signal when said output of said adding means (8) is in said range of 270° to 90°, said odd/even signal indicates even and said presence/absence signal is of the absence;
a fifth AND gate responsive to an output of said phase discriminating means (17) for producing a fifth field signal when said output of said adding means (8) is in said range of 90° to 270°, said odd/even signal indicates odd and said presence/absence signal is of the absence;
a sixth AND gate responsive to an output of said phase discriminating means (17) for producing a sixth field signal when said output of said adding means (8) is in said range of 90° to 270°, said odd/even signal indicates even and said presence/absence signal is of the presence;
a seventh AND gate responsive to an output of said phase discriminating means (17) for producing a seventh field signal when said output of said adding means (8) is in said range of 90° to 270°, said odd/even signal indicates odd and said presence/absence signal is of the presence; and
an eighth AND gate responsive to an output of said phase discriminating means (17) for producing a eighth field signal when said output of said adding means (8) is in said range of 90° to 270°, said odd/even signal indicates even and said presence/absence signal is of the absence.

## Patentansprüche

1. Eine Farbfeldnachweisschaltung eines PAL-Videosignals mit:
(a) Phasennachweismitteln (2), die auf das PAL-Videosignal ansprechen, um die Phasendifferenz zwischen dem Unterträger des PAL-Videosignals und dem vertikalen Synchronisationssignal oder dem horizontalen Synchronisationssignal des PAL-Videosignals nachzuweisen,
(b) Ungerade/Gerade-Feldnachweismitteln (5), die auf das PAL-Videosignal ansprechen, um festzustellen, ob das vorhandene Feld ungerade oder gerade ist, und somit ein Ungerade/Gerade-Signal zu erzeugen,
(c) Burst-Signalnachweismitteln (6), die auf das PAL-Videosignal ansprechen, um festzustellen, ob ein Farb-Burst-Signal des PAL-Videosignals vorhanden ist oder fehlt in einem gegebenen Intervall, welches durch den Nachweis eines horizontalen Synchronisationssignals bestimmt ist, das zuerst eben nach Ausgleichpulsen des PAL-Signals auftritt, und somit ein Vorhandensein/Fehlen-Signal zu erzeugen,
(d) Klassifizierungsmitteln, die auf die Phasendifferenz, das Ungerade/Gerade-Signal und das Vorhandensein/Fehlen-Signal ansprechen, um die Phasendifferenz in eine Gruppe erster bis vierter Farbfelder und eine weitere Gruppe fünfter bis achter Farbfelder zu klassifizieren auf der Grundlage einer Kombination aus Zuständen des Ungerade/Gerade-Signals und des Vorhandensein/Fehlen-Signals, wobei die Klassifizierungsmittel umfassen:
(αI) Decodiermittel (7), um einen Ausgang der Ungerade/Gerade- und der Vorhandensein/Fehlen-Signale in vier Zustände zu decodieren,
(αII) Ausgleichmittel (8-16), um die Phasendifferenz durch einen Winkelwert gemäß den vier Zuständen auszugleichen, so daß die Phasendifferenz der ersten bis vierten Farbfelder in einem ersten Winkelbereich und die Phasendifferenz der fünften bis achten Farbfelder einem zweiten Winkelbereich liegt,
(αIII) Phasendiskriminierungsmittel (17), um festzustellen, ob die ausgeglichene Phasendifferenz im ersten Winkelbereich oder im zweiten Winkelbereich liegt, und
(e) Farbfeldnachweismitteln (18-25), um festzustellen, zu welcher Ordnungszahl des Farbfeldes von den ersten bis achten Farbfeldern das vorhandene Feld gehört auf der Grundlage des Resultats der Klassifizierungsmittel und der Kombination der Zustände.

2. Eine Farbfeldnachweisschaltung eines PAL-Videosignals wie in Anspruch 1 beansprucht,
bei der das Burst-Signalnachweismittel (6) umfaßt:
(a) Burst-Gate-Mittel (6b), die auf das PAL-Videosignal ansprechen, um ein Burst-Gate-Signal zu erzeugen, welches das gegebene Intervall anzeigt, in Abhängigkeit vom Nachweis eines horizontalen Synchronisationssignals, das erstmals eben nach Ausgleichpulsen des PAL-Signals auftritt, und
(b) Nachweismittel (6c), die auf das Burst-Gate-Signal ansprechen, um festzustellen, ob das Farb-Burst-Signal in dem gegebenen Intervall vorhanden ist oder fehlt, und somit ein Vorhandensein/Fehlen-Signal zu erzeugen.

3. Eine Farbfeldnachweisschaltung eines PAL-Videosignals wie in Anspruch 1 beansprucht,
bei der das Farbfeldnachweismittel umfaßt:
Logikmittel (18-25), die auf einen Ausgang der Decodiermittel (7) und der Phasendiskriminierungsmittel (17) ansprechen, um festzustellen, zu welchem Feld des PAL-Videosignals von den ersten bis achten Farbfeldern das vorhandene Feld gehört gemäß den vier Zuständen und einem Ausgang der Phasendiskriminierungsmittel.

4. Eine Farbfeldnachweisschaltung eines PAL-Videosignals wie in Anspruch 1 beansprucht,
bei der das Ausgleichmittel umfaßt:
(a) eine Koeffizientenschaltung (9-12) zum Erzeugen eines Koeffizientensignals gemäß einem Ausgang der Ungerade/Gerade-Feldnachweismittel (5) und der Burst-Signalnachweismittel (6), so daß diese erzeugt einen ersten Ausgleich entsprechend der Phasendifferenz von 0° (9), wenn das Ungerade/Gerade-Signal ungerade ist und das Vorhandensein/Fehlen-Signal fehlt, einen zweiten Ausgleich entsprechend der Phasendifferenz von 135° (10), wenn das Ungerade/Gerade-Signal gerade ist und das Vorhandensein/Fehlen-Signal vorhanden ist, einen dritten Ausgleich entsprechend der Phasendifferenz von -90° (11), wenn das Ungerade/Gerade-Signal ungerade ist und das Vorhandensein/Fehlen-Signal vorhanden ist, und einen vierten Ausgleich entsprechend der Phasendifferenz von 45° (12), wenn das Ungerade/Gerade-Signal gerade ist und das Vorhandensein/Fehlen-Signal fehlt, und
(b) Addiermittel (18), um einen Ausgang der Koeffizientenschaltung zur Phasendifferenz zu addieren.

5. Eine Farbfeldnachweisschaltung eines PAL-Videosignals wie in Anspruch 1 beansprucht,
bei welcher der erste Winkelbereich 270° bis 90° und der zweite Winkelbereich 90° bis 270° ist.

6. Eine Farbfeldnachweisschaltung eines PAL-Videosignals wie in Anspruch 3 beansprucht,
bei der das Logikmittel (18-25) umfaßt:
ein erstes UND-Gate, das auf einen Ausgang der Phasendiskriminierungsmittel (17) anspricht, um ein erstes Feldsignal zu erzeugen, wenn der Ausgang der Addiermittel (8) im Bereich von 270° bis 90° liegt, das Ungerade/Gerade-Signal ungerade anzeigt und das Vorhandensein/Fehlen-Signal dem Fehlen entspricht,
ein zweites UND-Gate, das auf einen Ausgang der Phasendiskriminierungsmittel (17) anspricht, um ein zweites Feldsignal zu erzeugen, wenn der Ausgang der Addiermittel (8) im Bereich von 270° bis 90° liegt, das Ungerade/Gerade-Signal gerade anzeigt und das Vorhandensein/Fehlen-Signal dem Vorhandensein entspricht,
ein drittes UND-Gate, das auf einen Ausgang der Phasendiskriminierungsmittel (17) anspricht, um ein drittes Feldsignal zu erzeugen, wenn der Ausgang der Addiermittel (8) im Bereich von 270° bis 90° liegt, das Ungerade/Gerade-Signal ungerade anzeigt und das Vorhandensein/Fehlen-Signal dem Vorhandensein entspricht,
ein viertes UND-Gate, das auf einen Ausgang der Phasendiskriminierungsmittel (17) anspricht, um ein viertes Feldsignal zu erzeugen, wenn der Ausgang der Addiermittel (8) im Bereich von 270° bis 90° liegt, das Ungerade/Gerade-Signal gerade anzeigt und das Vorhandensein/Fehlen-Signal dem Fehlen entspricht,
ein fünftes UND-Gate, das auf einen Ausgang der Phasendiskriminierungsmittel (17) anspricht, um ein fünftes Feldsignal zu erzeugen, wenn der Ausgang der Addiermittel (8) im Bereich von 90° bis 270° liegt, das Ungerade/Gerade-Signal ungerade anzeigt und das Vorhandensein/Fehlen-Signal dem Fehlen entspricht,
ein sechstes UND-Gate, das auf einen Ausgang der Phasendiskriminierungsmittel (17) anspricht, um ein sechstes Feldsignal zu erzeugen, wenn der Ausgang der Addiermittel (8) im Bereich von 90° bis 270° liegt, das Ungerade/Gerade-Signal gerade anzeigt und das Vorhandensein/Fehlen-Signal dem Vorhandensein entspricht,
ein siebtes UND-Gate, das auf einen Ausgang der Phasendiskriminierungsmittel (17) anspricht, um ein siebtes Feldsignal zu erzeugen, wenn der Ausgang der Addiermittel (8) im Bereich von 90° bis 270° liegt, das Ungerade/Gerade-Signal ungerade anzeigt und das Vorhandensein/Fehlen-Signal dem Vorhandensein entspricht, und
ein achtes UND-Gate, das auf einen Ausgang der Phasendiskriminierungsmittel (17) anspricht, um ein achtes Feldsignal zu erzeugen, wenn der Ausgang der Addiermittel (8) im Bereich von 90° bis 270° liegt, das Ungerade/Gerade-Signal gerade anzeigt und das Vorhandensein/Fehlen-Signal dem Fehlen entspricht.

## Revendications

1. Circuit de détection de trame couleur d'un signal vidéo PAL, qui comprend :
(a) un moyen (2) de détection de phase, réagissant audit signal vidéo PAL pour détecter la différence de phase entre la sous-porteuse dudit signal vidéo PAL et le signal de synchronisation verticale ou le signal de synchronisation horizontale dudit signal vidéo PAL,
(b) un moyen (5) de détection de la parité des trames, réagissant audit signal vidéo PAL pour détecter si la présente trame est paire ou impaire afin de produire un signal pair ou impair,
(c) un moyen (6) de détection de signal de salve, réagissant audit signal vidéo PAL pour détecter si un signal de salve de couleur dudit signal vidéo PAL est présent ou absent au niveau d'un intervalle donné déterminé par détection d'un signal de synchronisation horizontale se produisant pour la première fois juste après des impulsions d'égalisation dudit signal vidéo PAL afin de produire un signal de présence ou d'absence,
(d) un moyen de classification réagissant à ladite différence de phase, audit signal pair/impair et audit signal de présence/absence pour classer ladite différence de phase dans un groupe de première à quatrième trames couleur et un autre groupe de cinquième à huitième trames couleur sur la base d'une combinaison des états dudit signal pair/impair et dudit signal de présence/absence, ledit moyen de classification comprenant :
(dI) un moyen de décodage (7) pour décoder la sortie desdits signaux pair/impair et de présence/absence en quatre états,
(dII) des moyens de décalage (8-16) pour décaler ladite différence de phase d'une certaine valeur angulaire en fonction desdits quatre états, de telle sorte que ladite différence de phase desdites première à quatrième trames couleur se trouve dans une première plage angulaire et que ladite différence de phase desdites cinquième à huitième trames couleur se trouve dans une seconde plage angulaire, et
(dIII) un moyen (17) de discrimination de phase pour déterminer si ladite différence de phase décalée se trouve dans ladite première plage angulaire ou dans ladite seconde plage angulaire, et
(e) des moyens (18-25) de détection de trame couleur pour détecter le nombre ordinal de trame couleur auquel appartient la présente trame parmi lesdites première à huitième trames couleur, sur la base du résultat dudit moyen de classification et de ladite combinaison des états.

2. Circuit de détection de trame couleur d'un signal vidéo PAL selon la revendication 1, dans lequel ledit moyen (6) de détection de signal de salve comprend :
(a) un moyen (6b) de déclenchement de salve, réagissant audit signal vidéo PAL pour produire un signal de déclenchement de salve représentatif dudit intervalle donné en réponse à la détection d'un signal de synchronisation horizontale se produisant pour la première fois juste après les impulsions d'égalisation dudit signal PAL, et
(b) un moyen de détection (6c) réagissant audit signal de déclenchement de salve pour déterminer si ledit signal de salve de couleur est présent ou absent audit intervalle donné, afin de produire un signal de présence ou d'absence.

3. Circuit de détection de trame couleur d'un signal vidéo PAL selon la revendication 1, dans lequel ledit moyen de détection de trame couleur comprend des moyens logiques (18-25) réagissant à une sortie dudit moyen de décodage (7) et dudit moyen (17) de discrimination de phase pour déterminer à quelle trame dudit signal vidéo PAL appartient la présente trame parmi lesdites première à huitième trames couleur, en fonction desdits quatre états et de la sortie dudit moyen de discrimination de phase.

4. Circuit de détection de trame couleur d'un signal vidéo PAL selon la revendication 1, dans lequel ledit moyen de décalage comprend :
(a) un circuit générateur de coefficient (9-12) pour produire, en fonction de la sortie dudit moyen (5) de détection de la parité des trames et dudit moyen (6) de détection de signal de salve, un signal de coefficient tel qu'il produit un premier décalage correspondant à une valeur de 0° (9) pour ladite différence de phase quand ledit signal pair/impair indique impair et ledit signal de présence/absence est un signal d'absence, un second décalage correspondant à une valeur de 135° (10) pour ladite différence de phase quand ledit signal pair/ impair est un signal pair et ledit signal de présence/absence est un signal de présence, un troisième décalage correspondant à une valeur de -90° (11) pour ladite différence de phase quand ledit signal pair/impair est un signal impair et ledit signal de présence/absence est un signal de présence et un quatrième décalage correspondant à une valeur de 45° (12) pour ladite différence de phase quand ledit signal pair/impair est un signal pair et ledit signal de présence/absence est un signal d'absence, et
(b) un circuit sommateur (18) pour additionner la sortie dudit circuit générateur de coefficient à ladite différence de phase.

5. Circuit de détection de trame couleur d'un signal vidéo PAL selon la revendication 1, dans lequel ladite première plage angulaire va de 270° à 90° et ladite seconde plage angulaire va de 90° à 270°.

6. Circuit de détection de trame couleur d'un signal vidéo PAL selon la revendication 3, dans lequel lesdits moyens logiques (18-25) comprennent :
- une première porte ET réagissant à la sortie dudit moyen (17) de discrimination de phase pour produire un signal de première trame quand ladite sortie dudit moyen sommateur (8) est dans ladite plage de 270° à 90°, ledit signal pair/impair indique impair et ledit signal de présence/absence est un signal d'absence,
- une seconde porte ET réagissant à la sortie dudit moyen (17) de discrimination de phase pour produire un signal de seconde trame quand ladite sortie dudit moyen sommateur (8) est dans ladite plage de 270° à 90°, ledit signal pair/impair indique pair et ledit signal de présence/absence est un signal de présence,
- une troisième porte ET réagissant à la sortie dudit moyen (17) de discrimination de phase pour produire un signal de troisième trame quand ladite sortie dudit moyen sommateur (8) est dans ladite plage de 270° à 90°, ledit signal pair/impair indique impair et ledit signal de présence/absence est un signal de présence,
- une quatrième porte ET réagissant à la sortie dudit moyen (17) de discrimination de phase pour produire un signal de quatrième trame quand ladite sortie dudit moyen sommateur (8) est dans ladite plage de 270° à 90°, ledit signal pair/impair indique pair et ledit signal de présence/absence est un signal d'absence,
- une cinquième porte ET réagissant à la sortie dudit moyen (17) de discrimination de phase pour produire un signal de cinquième trame quand ladite sortie dudit moyen sommateur (8) est dans ladite plage de 90° à 270°, ledit signal pair/impair indique impair et ledit signal de présence/absence est un signal d'absence,
- une sixième porte ET réagissant à la sortie dudit moyen (17) de discrimination de phase pour produire un signal de sixième trame quand ladite sortie dudit moyen sommateur (8) est dans ladite plage de 90° à 270°, ledit signal pair/impair indique pair et ledit signal de présence/absence est un signal de présence,
- une septième porte ET réagissant à la sortie dudit moyen (17) de discrimination de phase pour produire un signal de septième trame quand ladite sortie dudit moyen sommateur (8) est dans ladite plage de 90° à 270°, ledit signal pair/impair indique impair et ledit signal de présence/absence est un signal de présence, et
- une huitième porte ET réagissant à la sortie dudit moyen (17) de discrimination de phase pour produire un signal de huitième trame quand ladite sortie dudit moyen sommateur (8) est dans ladite plage de 90° à 270°, ledit signal pair/impair indique pair et ledit signal de présence/absence est un signal d'absence.
